# EUROPEAN PATENT APPLICATION

(11) **EP 3 290 895 A1**
(43) Date of publication of application: **07.03.2018**
(21) Application number: 16786598.9
(22) Date of filing: 28.04.2016
(51) Int. Cl.: G01M 13/04, F16C 19/52, F16C 41/00

(54) **ABNORMALITY DIAGNOSIS SYSTEM**

(30) Priority: 30.04.2015 JP 2015092672; 30.04.2015 JP 2015092673
(71) Applicant: NSK Ltd., Tokyo 141-8560 (JP)
(72) Inventor: AIZAWA Tomoyuki, Fujisawa-shi Kanagawa 251-8501 (JP); YANAGISAWA Tomoyuki, Fujisawa-shi Kanagawa 251-8501 (JP)
(74) Representative: Grünecker Patent- und Rechtsanwälte PartG mbB
(86) International application number: PCT/JP2016/063483
(87) International publication number: WO 2016/175322

(57) **Abstract**

This abnormality diagnosis system is provided with: a bearing comprising a plurality of constituent members; a sensor that is installed on a constituent member and detects signals from the surroundings; and an abnormality diagnosis device that diagnoses, on the basis of signals output from the sensor, abnormalities in the rolling bearing or in a device located at the periphery of the rolling bearing.

## Description

### TECHNICAL FIELD

The present invention relates to an abnormality diagnosis system.

### RELATED ART

A machine facility such as a vehicle, a machine tool, a wind mill and the like is equipped with a variety of many bearings such as rolling bearings and the like. When wear or damage occurs at the machine facility as it is used for a long time, smooth rotation and sliding of the bearing are inhibited, so that an abnormal sound may be generated and the lifetime may be reduced. For this reason, in the related art, it is inspected whether an abnormality such as wear, damage and the like has occurred at the bearing, after the machine facility has been used for a predetermined time period.

The inspection is performed by disassembling a part of the machine facility, to which the bearing is incorporated, or the entire machine facility, and the damage or wear having occurred at the bearing is found by an inspection with operator's eyes. As a result of the inspection, when the abnormality such as wear, damage and the like is found at the bearing, the bearing is replaced with a new product so as to prevent a failure or trouble of the machine facility before happens. However, according to the inspection method of disassembling the part or whole of the machine facility and finding the damage or wear with operator's eyes, an operation of detaching the bearing from the machine facility and an operation of again incorporating the bearing, for which the inspection has been completed, to the machine facility require a great effort, which increases the maintenance cost of the machine facility.

In order to solve the above problem, an abnormality diagnosis device configured to perform abnormality diagnosis of the bearing at an actually operating state of the machine facility has been suggested. For example, a monitoring diagnosis system of a rotary machine equipment disclosed in Patent Document 1 is configured to compare a vibration level, which is detected by each vibration detection sensor, and a set alarm generation level for alarm determination at each provision position of the vibration detection sensors and for each operation pattern and displays an alarm with an alarm display means when the vibration level reaches the alarm generation level. Thereby, a place at which the abnormal vibration occurs is specified and the abnormal vibration place is clearly displayed. Also, an abnormality diagnosis device of a rolling bearing disclosed in Patent Document 2 is configured to perform abnormality diagnosis of the rolling bearing on the basis of an effective value of a vibration waveform measured using a vibration sensor and an effective value of an alternating-current component of an envelope waveform of the vibration waveform. Thereby, it is possible to implement the correct abnormality diagnosis.

### Citation List

### Patent Document

Patent Document 1: Japanese Patent Application Publication No. 2009-109350A
Patent Document 2: Japanese Patent Application Publication No. 2011-154020A

### SUMMARY OF THE INVENTION

### Problems To Be Solved

In the meantime, a variety of devices such as a motor incorporated into the machine facility are also inspected by disassembling parts of the machine facility, to which the devices are incorporated, or the entire machine facility. Therefore, it is preferably to perform the abnormality diagnosis of the diverse devices upon the abnormality diagnosis of the bearing, from standpoints of the maintenance cost of the machine facility, and the like. However, according to the inventions disclosed in Patent Documents 1 and 2, the abnormality diagnosis is simply performed for the members at which the sensors are provided and cannot be performed for a device except for the members to which the sensors are provided.

The present invention has been made in view of the above situations, and an object thereof is to provide an abnormality diagnosis system capable of performing abnormality diagnosis of a bearing and abnormality diagnosis of a device disposed around the bearing.

### Means for Solving Problems

The above object of the present invention is achieved by following configurations.
(1) An abnormality diagnosis system including:
   a bearing that has a plurality of components;
   one sensor that is provided at the component and that is configured to detect surrounding signals; and
   an abnormality diagnosis device that is configured to diagnose abnormality of the bearing and abnormality of a device disposed around the bearing, based on signals output from the sensor.
(2) The abnormality diagnosis system of the above (1), wherein the abnormality diagnosis device determines that the bearing or the device is abnormal, when an output value of the sensor increases or exceeds a predetermined threshold value.
(3) The abnormality diagnosis system of the above (I) or (2), wherein the sensor is provided in the vicinity of an axial end portion of a bearing ring of the bearing.
(4) The abnormality diagnosis system of the above (1) or (2), wherein the sensor is provided in the vicinity of a raceway surface of a bearing ring of the bearing.
(5) The abnormality diagnosis system of any one of the above (1) to (4), wherein the sensor is a temperature sensor.
(6) The abnormality diagnosis system of any one of the above (1) to (4), wherein the sensor is a vibration sensor.
(7) The abnormality diagnosis system of any one of the above (1) to (4), wherein the sensor is a load sensor.
(8) The abnormality diagnosis system of any one of the above (1) to (7), wherein the sensor is provided at a fixed ring of the bearing.
(9) The abnormality diagnosis system of any one of the above (1) to (7), wherein the sensor is provided at a rotary ring of the bearing.

### Effects of the Invention

According to the present invention, it is possible to perform the abnormality diagnosis of the bearing and the abnormality diagnosis of the device disposed around the bearing.

### BRIEF DESCRIPTION OF THE DRAWINGS

FIG. 1 is a schematic view of an abnormality diagnosis system in accordance with a first illustrative embodiment.
FIG. 2 is a graph depicting a relation between a detected temperature of the sensor and time.
FIG. 3 is a graph depicting a relation between a detected temperature of the sensor and time when an abnormality has occurred in any one of a rolling bearing, a motor and a pump.
FIG. 4 is a schematic view of an abnormality diagnosis system in accordance with a modified embodiment of the first illustrative embodiment.
FIG. 5 is a schematic view of an abnormality diagnosis system in accordance with a modified embodiment of the first illustrative embodiment.
FIG. 6 is a schematic view of an abnormality diagnosis system in accordance with a modified embodiment of the first illustrative embodiment.
FIG. 7 is a schematic view of an abnormality diagnosis system in accordance with a second illustrative embodiment.
FIG. 8 is a schematic view of an abnormality diagnosis system in accordance with a modified embodiment of the second illustrative embodiment.
FIG. 9 is a schematic view of an abnormality diagnosis system in accordance with a modified embodiment of the second illustrative embodiment.
FIG. 10 is a schematic view of an abnormality diagnosis system in accordance with a modified embodiment of the second illustrative embodiment.
FIG. 11 is a sectional view of an angular ball bearing in which a sensor is disposed.
FIG. 12A is a sectional view of a cylindrical roller bearing in which a sensor is disposed.
FIG. 12B is a sectional view of a cylindrical roller bearing in which a sensor is disposed.
FIG. 13 is a sectional view of a conical roller bearing in which a sensor is disposed.
FIG. 14 is a sectional view of a self-aligning roller bearing in which a sensor is disposed.

### DETAILED DESCRIPTION OF ILLUSTRATIVE EMBODIMENTS

Hereinafter, an abnormality diagnosis system in accordance with illustrative embodiments of the present invention will be described with reference to the drawings.

### <First Illustrative Embodiment>

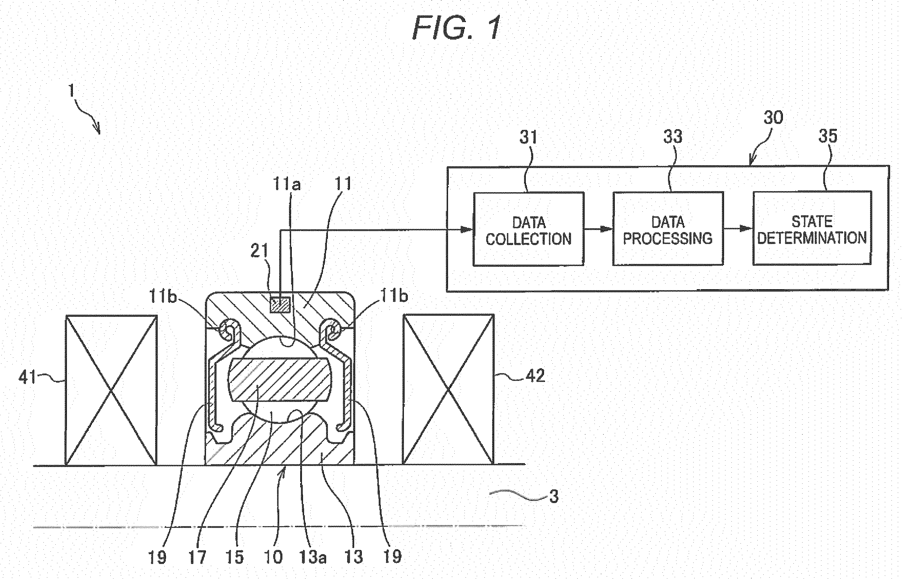

As shown in FIG. 1, an abnormality diagnosis system I of a first illustrative embodiment includes a rolling bearing (deep groove ball bearing) 10, only one sensor 21 provided in the rolling bearing 10, and an abnormality diagnosis device 30 configured to diagnose abnormalities of the rolling bearing 10 and a variety of devices (for example, a motor 41 and a pump 42) on the basis of signals output from the sensor 21.

The rolling bearing 10 includes an outer ring 11(a bearing ring that is a fixed ring) having an outer ring raceway surface 11a formed on an inner peripheral surface thereof, an inner ring 13 (a bearing ring that is a rotary ring) having an inner ring raceway surface 13a formed on an outer peripheral surface thereof, a plurality of balls 15 disposed to be rollable between the outer ring raceway surface 11a and the inner ring raceway surface 13a, a retainer 17 configured to hold the plurality of balls 15 to be rollable and a pair of seal members 19 fixed at both axial sides of the inner peripheral surface of the outer ring 11. That is, the rolling bearing 10 includes a plurality of components such as the outer ring 11, the inner ring 13, the ball 15, the retainer 17, the seal member 19 and the like.

The inner ring 13 is a rotary ring externally fitted and fixed to a shaft 3 and configured to rotate together with the shaft 3. At one axial end-side (a left side in FIG. 1) of the rolling bearing 10, a motor 41 (a device) is fixed to the shaft 3 and the shaft 3 is configured to be rotatively driven by a rotor (not shown) of the motor 41. Also, at the other axial end-side (a right side in FIG. 1) of the rolling bearing 10, a pump 42 is fixed to the shaft 3, and a driving force of the motor 41 is transmitted to the pump 42 via the shaft 3.

The outer ring 11 is a fixed ring internally fitted and fixed to a housing (not shown) and configured not to rotate. The inner peripheral surface of the outer ring 11 is formed at both axial sides of the outer ring raceway surface 11a with a pair of seal grooves 11b for fixing the pair of seal members 19 thereto. Each of the pair of seal members 19 is a non-contact type extending radially and configured to face the outer peripheral surface of the inner ring 13 via a gap. Thereby, the pair of seal members 19 is configured to seal a space between the outer ring 11 and the inner ring 13 and to prevent foreign matters from being introduced into the bearing from an outside.

In the outer ring 11, the sensor 21 configured to detect surrounding signals is embedded. In the first illustrative embodiment, the sensor 21 is a temperature sensor 21 provided at an axially central portion in the vicinity of the outer peripheral surface of the outer ring 11. A temperature that is to be detected by the temperature sensor 21 is influenced by heats generated from the rolling bearing 10, the motor 41 and the pump 42.

The temperature sensor 21 is configured to output and transmit the detected temperature to the abnormality diagnosis device 30. The abnormality diagnosis device 30 is a microcomputer, for example. A program recorded in the microcomputer is executed, so that respective units such as a data collection unit 31 execute following processing.

A data collection unit 31 of the abnormality diagnosis device 30 is configured to collect the output data from the temperature sensor 21. A data processing unit 33 of the abnormality diagnosis device 30 is configured to process the collected output data and to store the respective output data. A state determination unit 35 of the abnormality diagnosis device 30 determines that at least one of the rolling bearing 10, the motor 41 and the pump 42 is abnormal, when an output value of the temperature sensor 21 first increases from a rated temperature or first exceeds a predetermined threshold value.

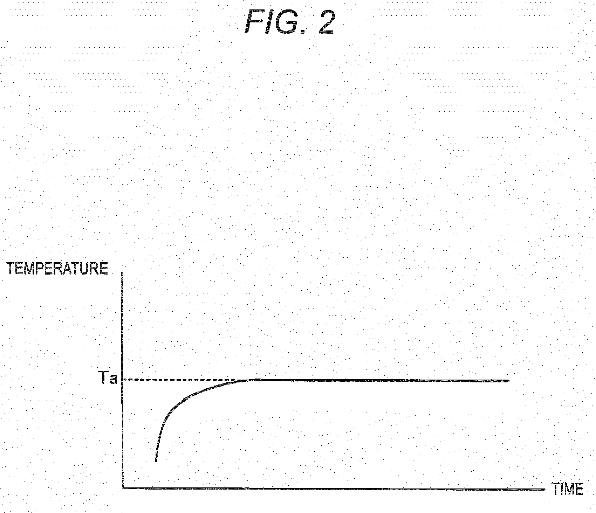

In a machine facility in which the abnormality diagnosis system 1 is incorporated, the bearing 10, the motor 41 and the pump 42 generate the heat. For this reason, as shown in FIG. 2, in a temperature rising curve obtained from the output values of the temperature sensor 21, the temperature increases for the time being after operations of the rolling bearing 10, the motor 41 and the pump 42 start. However, at a point of time at which the temperature reaches a predetermined temperature (rated temperature Ta) after predetermined time elapses, the heats generated from the rolling bearing 10, the motor 41 and the pump 42 and the heat to be escaped to the surrounding are balanced, so that a steady state is formed.

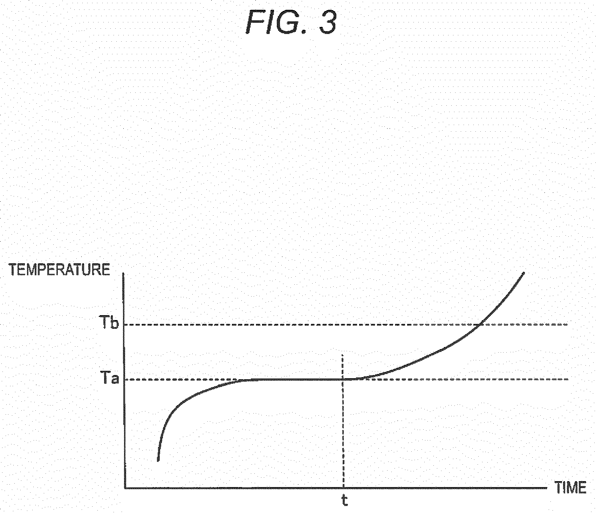

Herein, as shown in FIG. 3, at time t, when the motor 41 abnormally generates heat due to any cause, when the rolling bearing 10 abnormally generates heat due to causes such as seizing, wear and the like and when the pump 42 abnormally generates heat due to any cause, the output value of the temperature sensor 21 increases and exceeds a predetermined threshold value Tb.

Therefore, the abnormality diagnosis device 30 determines that at least one of the rolling bearing 10, the motor 41 and the pump 42 is abnormal, when the output value of the temperature sensor 21 increases or exceeds the predetermined threshold value Tb.

Like this, according to the abnormality diagnosis system 1 of the first illustrative embodiment, it is possible to effectively perform the abnormality diagnosis of the rolling bearing 10 and the abnormality diagnosis of the devices (the motor 41 and the pump 42) disposed around the rolling bearing 10. In particular, since it is sufficient to provide the rolling bearing 10 with only one sensor, it is possible to save the cost of the product and to improve the handling property by simplifying wiring for sensor output and wiring for power feeding.

In the meantime, the present invention is not limited to the above illustrative embodiment and can be appropriately changed and modified.

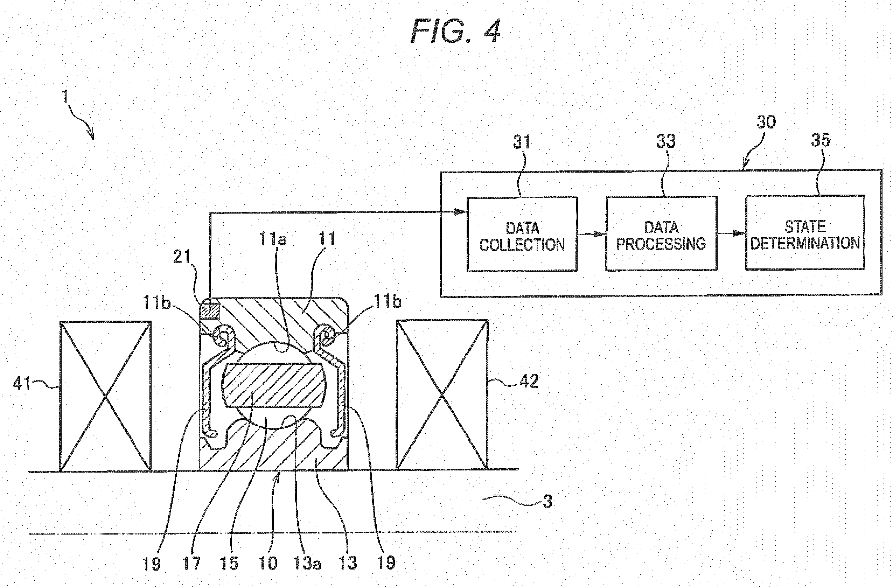

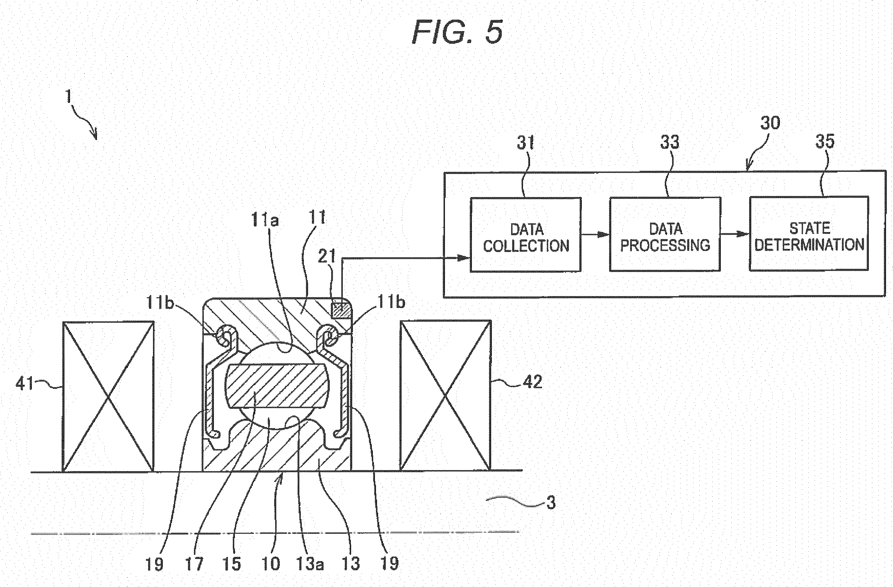

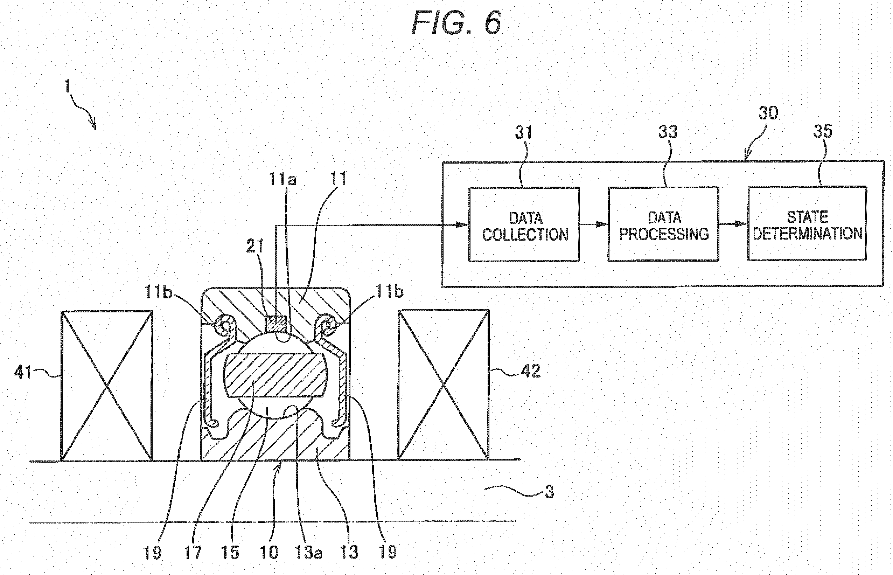

The provision position of the sensor 21 can be appropriately changed so that it is to be a position or a phase suitable for a target of which an abnormality is to be detected. For example, as shown in FIG. 4, the sensor 21 may be disposed in the vicinity of one axial end portion of the outer ring 11 so as to improve sensitivity to an abnormality of the motor 41. That is, the sensor may be arranged at a position that is suitable for abnormality detection of the motor 41. Also, as shown in FIG. 5, the sensor 21 may be disposed in the vicinity of the other axial end portion of the outer ring 11 so as to improve sensitivity to an abnormality of the pump 42. That is, the sensor may be arranged at a position that is suitable for abnormality detection of the pump 42. Also, as shown in FIG. 6, the sensor 21 may be disposed in the vicinity of the outer ring raceway surface 11a of the outer ring II so as to improve sensitivity to an abnormality of the rolling bearing 10. That is, the sensor may be arranged at a position that is suitable for abnormality detection of the rolling bearing 10.

Meanwhile, in the specification, the description "the vicinity of a surface" and "the vicinity of an end portion" indicate a position matched with the surface or a surface of the end portion, or a position slightly recessed into a member from the surface or a surface of the end portion.

### <Second Illustrative Embodiment>

In the below, an abnormality diagnosis system 2 including a rolling bearing (deep groove ball bearing) 10 in which the sensor 21 is disposed in the inner ring 13 is described. The rolling bearing 10 of the second illustrative embodiment has the similar configuration to the first illustrative embodiment, except that the sensor 21 is disposed in the inner ring 1, contrary to the first illustrative embodiment where the sensor 21 is disposed in the outer ring 11. Thus, the common members are denoted with the same reference numerals and the descriptions thereof are simplified or omitted.

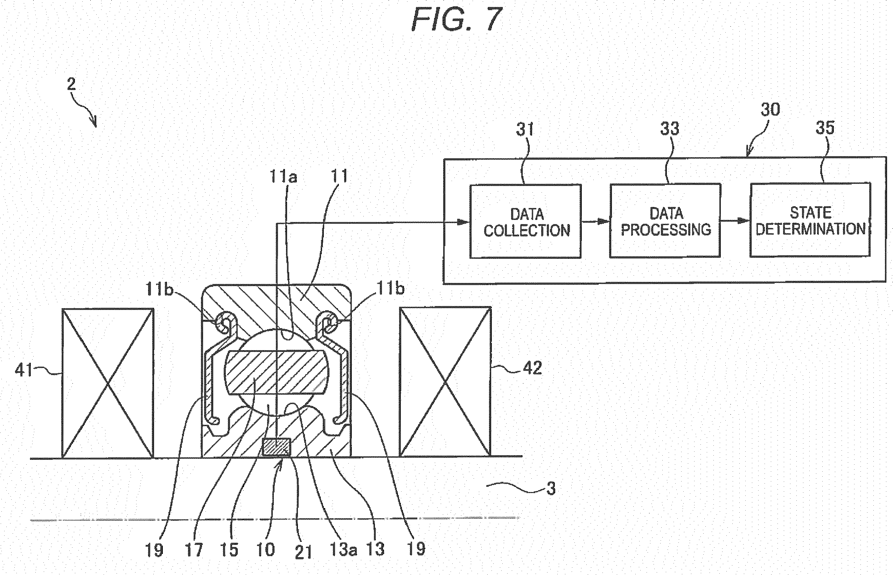

As shown in FIG. 7, the abnormality diagnosis system 2 of the second illustrative embodiment includes the rolling bearing 10, only one sensor 21 provided in the inner ring 13 (a bearing ring that is a rotary ring) of the rolling bearing 10, and the abnormality diagnosis device 30 configured to diagnose abnormalities of the rolling bearing 10 and a variety of devices (for example, the motor 41 and the pump 42) on the basis of signals output from the sensor 21.

In the inner ring 13, the sensor 21 configured to detect surrounding signals is embedded. In the second illustrative embodiment, the sensor 21 is a temperature sensor 21 provided at an axially central portion in the vicinity of the inner peripheral surface of the inner ring 13. A temperature that is to be detected by the temperature sensor 21 is influenced by heats generated from the rolling bearing 10, the motor 41 and the pump 42.

The temperature sensor 21 is configured to output and transmit the detected temperature to the abnormality diagnosis device 30. The abnormality diagnosis device 30 is a microcomputer, for example. A program recorded in the microcomputer is executed, so that respective units such as a data collection unit 31 execute respective processing similar to the first illustrative embodiment.

Like this, according to the abnormality diagnosis system 2 of the second illustrative embodiment, it is possible to effectively perform the abnormality diagnosis of the rolling bearing 10 and the abnormality diagnosis of the devices (the motor 41 and the pump 42) disposed around the rolling bearing 10. In particular, since it is sufficient to provide the rolling bearing 10 with only one sensor, it is possible to save the cost of the product and to improve the handling property by simplifying wiring for sensor output and wiring for power feeding.

In the meantime, the configuration of the second illustrative embodiment can be appropriately changed and modified, like the first illustrative embodiment.

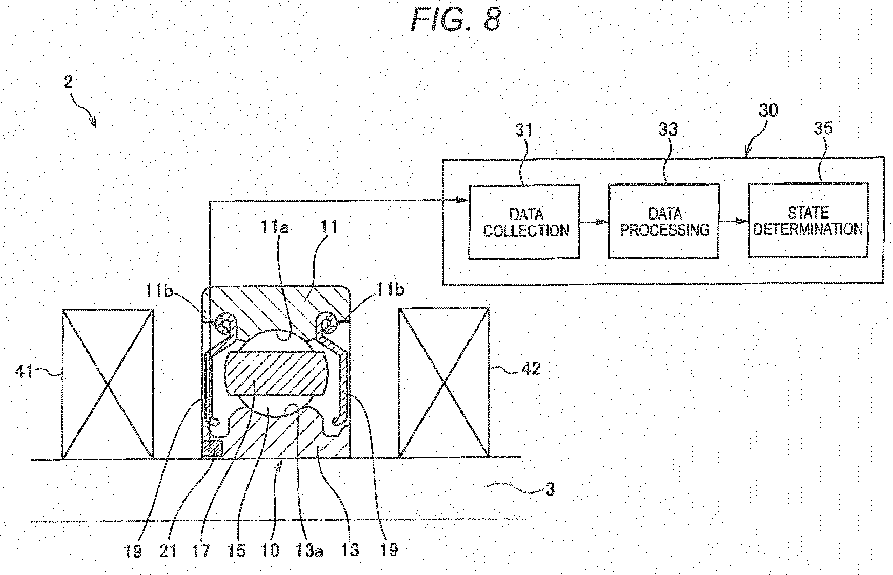

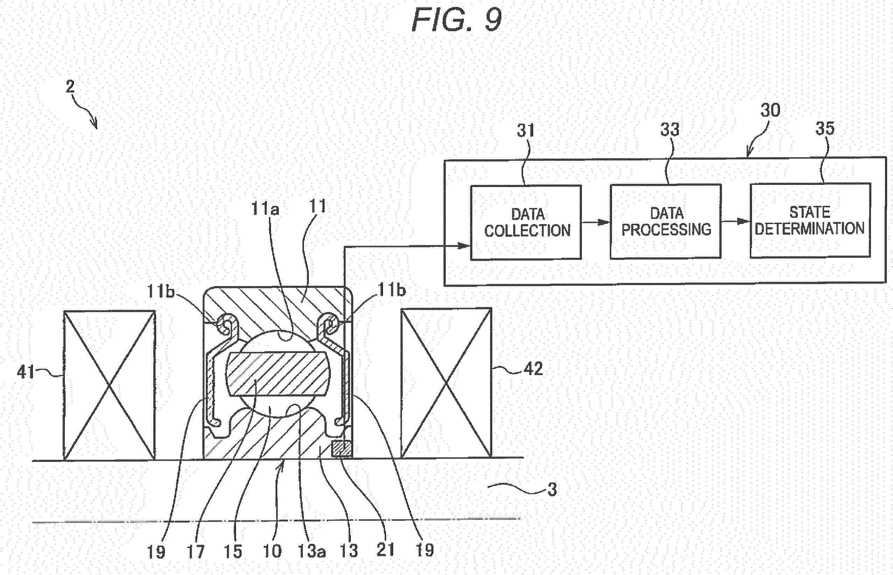

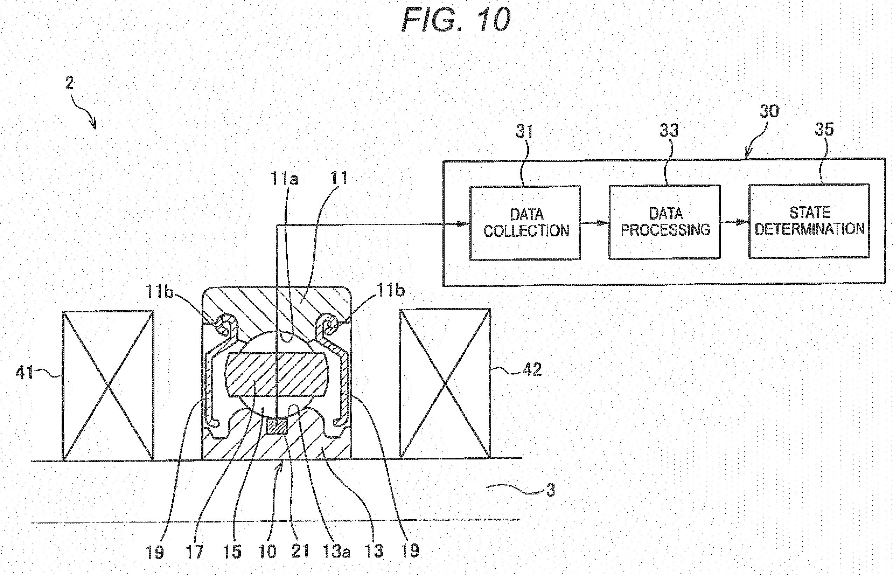

The provision position of the sensor 21 can be appropriately changed so that it is to be a position or a phase suitable for a target of which an abnormality is to be detected. For example, as shown in FIG. 8, the sensor 21 may be disposed in the vicinity of one axial end portion of the inner ring 13 so as to improve sensitivity to an abnormality of the motor 41. That is, the sensor may be arranged at a position that is suitable for abnormality detection of the motor 41. Also, as shown in FIG. 9, the sensor 21 may be disposed in the vicinity of the other axial end portion of the inner ring 13 so as to improve sensitivity to an abnormality of the pump 42. That is, the sensor may be arranged at a position that is suitable for abnormality detection of the pump 42. Also, as shown in FIG. 10, the sensor 21 may be disposed in the vicinity of the inner ring raceway surface 13a of the inner ring 13 so as to improve sensitivity to an abnormality of the rolling bearing 10. That is, the sensor may be arranged at a position that is suitable for abnormality detection of the rolling bearing 10.

Also, the provision part of the sensor 21 is not limited to the outer ring 11 or the inner ring 13 inasmuch as it is a component of the rolling bearing 10. For example, the sensor may be provided in the retainer 17 or the seal member 19.

Also, the sensor 21 to be provided is not particularly limited inasmuch as it can monitor the state of the rolling bearing 10 or the device (for example, the motor 41 or the pump 42) disposed around the rolling bearing 10. For example, a vibration sensor or a load sensor may be adopted. Herein, like the second illustrative embodiment, when the sensor is provided in the inner ring 13, which is a rotary ring, heat, vibration, load and the like are likely to be transmitted from the shaft 3. Therefore, it is possible to rapidly detect the behavior, as compared to the configuration where the sensor is provided at the other component of the rolling bearing 10.

When the load sensor is adopted as the sensor to be provided, if the load sensor is provided in the outer ring 11, which is a fixed ring, the load sensor should be provided in a load zone, which limits a provision phase on a circumference. However, when providing the load sensor in the inner ring 13, which is a rotary ring, like the second illustrative embodiment, if the load sensor is provided at any phase on the circumference, it is possible to detect the respective behaviors.

Also, the signal transmission method from the sensor to the data collection unit 31 of the abnormality diagnosis device 30 may be any method, irrespective of whether it is a wired or wireless method.

When the abnormality diagnosis device 30 determines the abnormality of the rolling bearing 10, the motor 41 or the pump 42, the abnormality diagnosis device may notify the abnormality to an upper system so as to automatically stop the machine facility or issue a warning to an operator and a manager with an alarm, a screen display and the like.

The devices to be disposed around the rolling bearing 10 are not limited to the motor 41 and the pump 42, and any device can be adopted.

In the meantime, the rolling bearing 10 is a radial rolling bearing. However, the present invention is not limited thereto and can be applied to the other types of rolling bearings. An example where the present invention is applied to the other types of rolling bearings is described.

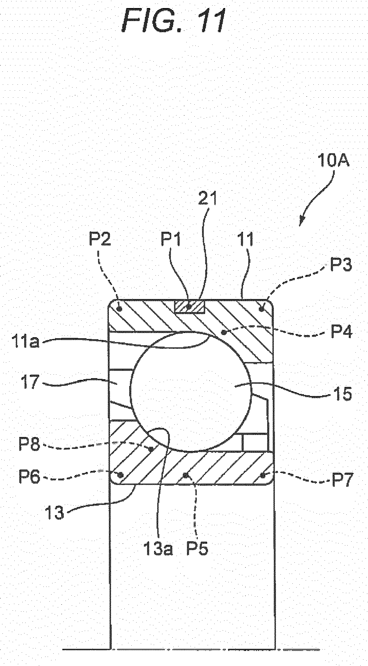

FIG. 11 is a sectional view of an angular ball bearing 10A in which the sensor 21 is disposed. In the shown example, the angular ball bearing 10A includes the outer ring 11, the inner ring 13, the plurality of balls 15 and the retainer 17 configured to hold the plurality of balls 15 to be rollable. The sensor 21 is disposed at an axially central portion P1 in the vicinity of the outer peripheral surface of the outer ring 11.

Also, the present invention is not limited to the above configuration. That is, also in the angular ball bearing 10A, as described above, the sensor 21 may be disposed at a position P2 in the vicinity of one axial end portion in the vicinity of the outer peripheral surface of the outer ring 11, a position P3 in the vicinity of the other axial end portion in the vicinity of the outer peripheral surface of the outer ring 11 or a position P4 in the vicinity of the outer ring raceway surface 11a of the outer ring 11. Also, the sensor 21 may be disposed at an axially central portion P5 in the vicinity of the inner peripheral surface of the inner ring 13, a position P6 in the vicinity of one axial end portion in the vicinity of the inner peripheral surface of the inner ring 13, a position P7 in the vicinity of the other axial end portion in the vicinity of the inner peripheral surface of the inner ring 13 or a position P8 in the vicinity of the inner ring raceway surface 13a of the inner ring 13.

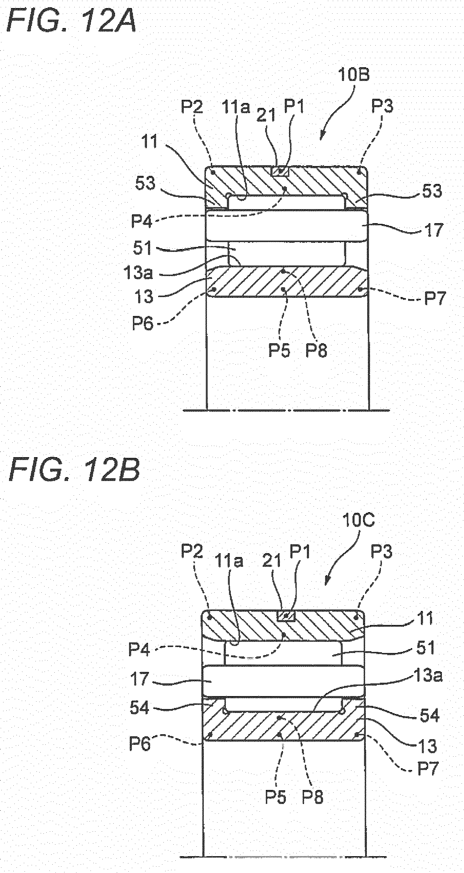

FIG. 12A is a sectional view of a cylindrical roller bearing 10B in which the sensor 21 is disposed, and FIG. 12B is a sectional view of a cylindrical roller bearing 10C in which the sensor 21 is disposed. The cylindrical roller bearings 10B, 10C include, respectively, the outer ring 11, the inner ring 13, a plurality of rollers 51 and the retainer 17 configured to hold the plurality of rollers 51 to be rollable. The cylindrical roller bearing 10B shown in FIG. 12A has collar portions 53, 53 provided at both axial end portions of the inner peripheral surface of the outer ring 11 and protruding radially inwards. The cylindrical roller bearing 10C shown in FIG. 12B has collar portions 54, 54 provided at both axial end portions of the outer peripheral surface of the inner ring and protruding radially outwards. In any of the bearings 10B, 10C, the sensor 21 is disposed at the axially central portion P1 in the vicinity of the outer peripheral surface of the outer ring 11. Also in this configuration, the sensor 21 may be disposed at any position of P1 to P8.

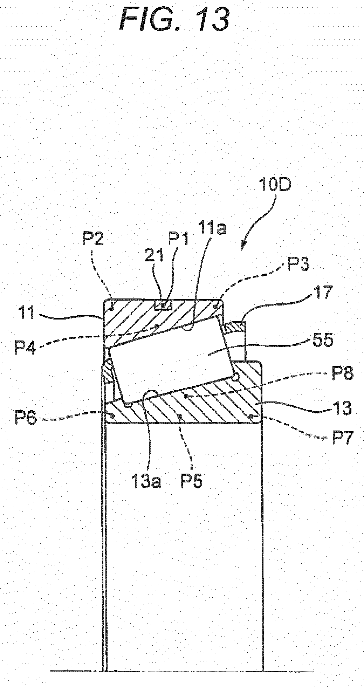

FIG. 13 is a sectional view of a conical roller bearing 10D in which the sensor 21 is disposed. The conical roller bearing 10D includes the outer ring 11, the inner ring 13, a plurality of conical rollers 55 and the retainer 17 configured to hold the plurality of conical rollers 55 to be rollable. The sensor 21 is disposed at the axially central portion P1 in the vicinity of the outer peripheral surface of the outer ring 11. Also in this configuration, the sensor 21 may be disposed at any position of P1 to P8.

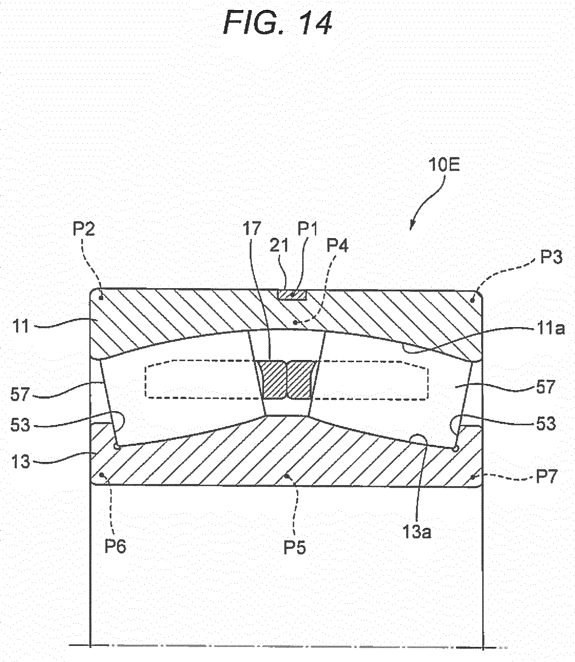

FIG. 14 is a sectional view of a self-aligning roller bearing 10E in which the sensor 21 is disposed. The self-aligning roller bearing 10E includes the outer ring 11, the inner ring 13, a plurality of rollers 57 disposed in two rows and the retainer 17 configured to hold the plurality of rollers 57 to be rollable. The sensor 21 is disposed at the axially central portion P1 in the vicinity of the outer peripheral surface of the outer ring 11. Also in this configuration, the sensor 21 may be disposed at any position of P1 to P8.

Each of the bearings shown in FIGS. 11 to 14 may include a seal member, as a component, in addition to the outer ring 11, the inner ring 13, the rolling element (the ball 15, the cylindrical roller 51, the conical roller 55, the roller 57) and the retainer 17, and the sensor 21 may be disposed at any one of the components. Also, the rotary ring may be the outer ring 11 or the inner ring 13. In any configuration, it is possible to achieve the operational effects similar to the first and second illustrative embodiments.

The subject application is based on a Japanese Patent Application No. 2015-92672 filed on April 30, 2015 and a Japanese Patent Application No. 2015-92673 filed on April 30, 2015, the contents of which are incorporated herein by reference.

### Description of Reference Numerals

- 1, 2:: abnormality diagnosis system
- 10:: bearing
- 11:: outer ring (component, bearing ring)
- 13:: inner ring (component, bearing ring)
- 15:: ball (component)
- 17:: retainer (component)
- 19:: seal member (component)
- 21:: temperature sensor
- 30:: abnormality diagnosis device
- 31:: data collection unit
- 33:: data processing unit
- 35:: state determination unit
- 41:: motor (device)
- 42:: pump (device)
- 51:: cylindrical roller (component)
- 55:: conical roller (component)
- 57:: roller (component)

## Claims

1. An abnormality diagnosis system comprising:
a bearing that has a plurality of components;
one sensor that is provided at the component and that is configured to detect surrounding signals; and
an abnormality diagnosis device that is configured to diagnose abnormality of the bearing and abnormality of a device disposed around the bearing, based on signals output from the sensor.

2. The abnormality diagnosis system according to claim 1, wherein the abnormality diagnosis device determines that the bearing or the device is abnormal, when an output value of the sensor increases or exceeds a predetermined threshold value.

3. The abnormality diagnosis system according to claim 1 or 2, wherein the sensor is provided in the vicinity of an axial end portion of a bearing ring of the bearing.

4. The abnormality diagnosis system according to claim 1 or 2, wherein the sensor is provided in the vicinity of a raceway surface of a bearing ring of the bearing.

5. The abnormality diagnosis system according to any one of claims 1 to 4, wherein the sensor is a temperature sensor.

6. The abnormality diagnosis system according to any one of claims 1 to 4, wherein the sensor is a vibration sensor.

7. The abnormality diagnosis system according to any one of claims 1 to 4, wherein the sensor is a load sensor.

8. The abnormality diagnosis system according to any one of claims 1 to 7, wherein the sensor is provided at a fixed ring of the bearing.

9. The abnormality diagnosis system according to any one of claims 1 to 7, wherein the sensor is provided at a rotary ring of the bearing.
